# FASCICULE DE BREVET EUROPEEN

(11) **EP 1 800 001 B1**
(45) Date de publication et mention de la délivrance du brevet: **11.09.2019**
(21) Numéro de dépôt: 05804279.7
(22) Date de dépôt: 22.09.2005
(51) Int. Cl.: F02N 11/00, F02N 11/08, F02N 11/04, F02D 41/20

(54) **PROCEDE DE COMMANDE D'UNE MACHINE ELECTRIQUE REVERSIBLE**
STEUERUNGSVERFAHREN FÜR EINE REVERSIBLE, ELEKTRISCHE MASCHINE
METHOD OF CONTROLLING A REVERSIBLE ELECTRIC MACHINE

(30) Priorité: 23.09.2004 FR 0410092
(43) Date de publication de la demande: 27.06.2007
(73) Titulaire: VALEO EQUIPEMENTS ELECTRIQUES MOTEUR, 94017 Créteil Cedex (FR)
(72) Inventeur: LECOLE, Brice, F-75012 Paris (FR); LAURENCE, Magali, F-75012 Paris (FR)
(74) Mandataire: de Lambilly Delorme, Marie Pierre
(86) Numéro de dépôt international: PCT/FR2005/002356
(87) Numéro de publication internationale: WO 2006/032796

(56) Documents cités:
- EP-A- 1 469 587
- US-A- 4 412 137
- US-A- 4 414 937
- US-A- 5 451 820
- US-A1- 2003 087 724
- US-A1- 2003 230 442
- US-A1- 2004 035 618
- US-B1- 6 335 609

## Description

### Objet de l'invention

La présente invention concerne un procédé de préparation d'une machine électrique réversible à une phase de démarrage d'un moteur thermique d'un véhicule.

L'invention trouve une application particulièrement avantageuse dans le domaine de l'industrie automobile, et plus spécialement dans celui des véhicules équipés d'un système de démarrage/arrêt automatique, tel que le système connu sous le terme anglo-saxon de « Stop and Go ».

### Etat de la technique

Les véhicules aptes à fonctionner selon le mode « Stop and Go » sont équipés d'une machine électrique réversible, ou alterno-démarreur, couplée au moteur thermique, au moyen d'une courroie par exemple. D'une manière générale, une machine électrique réversible d'un véhicule cumule deux fonctions distinctes, à savoir, d'une part, la fonction classique d'alternateur lorsque l'arbre du moteur thermique entraîne le rotor de la machine de manière à produire un courant électrique au stator, et, d'autre part, la fonction de démarreur lorsqu'à l'inverse, un courant appliqué au stator de la machine provoque la mise en rotation du rotor, lequel entraîne alors l'arbre du moteur thermique d'une manière analogue à un démarreur classique.

L'application d'un alterno-démarreur au mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage. Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré notamment au moyen de l'alterno-démarreur à la suite de la détection par le système de pilotage au démarrage du véhicule de l'enfoncement de la pédale d'embrayage par le conducteur ou de toute autre action qui peut être interprétée comme la volonté du conducteur de redémarrer son véhicule. On comprend l'intérêt du mode « Stop and Go » en terme d'économie d'énergie et de réduction de la pollution, surtout en milieu urbain.

Lorsque l'on veut démarrer un moteur thermique initialement à l'arrêt au moyen d'un alterno-démarreur, la première phase à réaliser est de magnétiser le rotor en lui envoyant un courant d'excitation maximal. Cette magnétisation, nécessaire à l'obtention du couple souhaité pour démarrer le moteur thermique, doit durer un certain temps, de l'ordre de 150 ms, avant que l'onduleur ne soit mis en marche afin de faire tourner le rotor en appliquant un courant électrique au stator de la machine.

Cette phase de préparation du rotor est exécutée sur un ordre de démarrage envoyé par un module de commande chargé de gérer le système « Stop and Go », le démarrage n'étant rendu effectif par l'excitation du stator. qu'après expiration du délai de magnétisation d'environ 150 ms.

Ce délai de magnétisation induit donc un retard systématique au démarrage du moteur thermique, préjudiciable à l'agrément et l'efficacité de la conduite lorsque le système de démarrage/arrêt automatique du véhicule est activé.

Le document US6335609B1 décrit un procédé pour réduire le temps de démarrage d'un moteur à combustion interne équipé d'une machine alterno-démarreur à induction. Le procédé autorise une réduction des courants de phase de pic lors du démarrage du moteur à combustion interne. Le temps de démarrage est réduit par un pré-fluxage de la machine à induction. Les courants de phase de pic sont réduits en diminuant une commande de courant de flux à la fin d'une période de temps prédéterminée et simultanément à l'application d'une commande de courant de couple. Ce procédé prévoit également une stratégie pour anticiper une commande de démarrage pour un moteur à combustion interne et détermine une stratégie de démarrage basée sur la commande de démarrage et l'état de fonctionnement du moteur à combustion interne. Le document WO2005/110794A1 décrit un procédé pour faire fonctionner un véhicule hybride comprenant un moteur à combustion interne, une boîte de vitesses, un machine électrique alterno-démarreur disposée entre le moteur à combustion interne et la boîte de vitesses, et un embrayage non-automatique disposé entre la machine électrique et la boîte de vitesses. Le moteur à combustion interne est stoppé dans des situations de fonctionnement prédéfinies au moyen d'un système « Stop and Go ». Pendant ces phases de stop, un courant de magnétisation et/ou un onduleur pour la machine électrique est désactivé, et le moteur à combustion interne est relancé au moyen de la machine électrique lorsqu'une demande de charge intervient suite à une action du conducteur du véhicule. Avant de redémarrer le moteur à combustion interne, la position de l'embrayage est vérifiée et le moteur à combustion interne est redémarré une fois que l'embrayage est totalement ouvert. De cette manière, lorsque l'embrayage est actionné, c'est-à-dire, aussitôt que le conducteur a commencé à actionner embrayage, et avant l'ouverture complète de celui-ci, l'onduleur de la machine électrique est activé ou le courant de magnétisation pour le machine est généré.

### Objet de l'invention

C'est précisément un objet de la présente invention de définir les modalités dans lesquelles un ordre de démarrage du moteur thermique du véhicule pourrait être exécuté dans le cadre d'un système « Stop and Go » sans subir l'effet négatif du délai nécessaire pour préparer l'alterno-démarreur à exécuter un ordre de démarrage par magnétisation du rotor.

Cet objet est atteint, conformément à la présente invention, par la mise en oeuvre d'un procédé telle que défini dans la revendication 1 ci-annexée.

Le document US6335609B1 décrit un procédé pour réduire le temps de démarrage d'un moteur à combustion interne équipé d'une machine alterno-démarreur à induction. Le procédé autorise une réduction des courants de phase de pic lors du démarrage du moteur à combustion interne. Le temps de démarrage est réduit par un pré-fluxage de la machine à induction. Les courants de phase de pic sont réduits en diminuant une commande de courant de flux à la fin d'une période de temps prédéterminée et simultanément à l'application d'une commande de courant de couple. Ce procédé prévoit également une stratégie pour anticiper une commande de démarrage pour un moteur à combustion interne et détermine une stratégie de démarrage basée sur la commande de démarrage et l'état de fonctionnement du moteur à combustion interne.

Le document WO2005/110794A1 décrit un procédé pour faire fonctionner un véhicule hybride comprenant un moteur à combustion interne, une boîte de vitesses, un machine électrique alterno-démarreur disposée entre le moteur à combustion interne et la boîte de vitesses, et un embrayage non-automatique disposé entre la machine électrique et la boîte de vitesses. Le moteur à combustion interne est stoppé dans des situations de fonctionnement prédéfinies au moyen d'un système « Stop and Go ». Pendant ces phases de stop, un courant de magnétisation et/ou un onduleur pour la machine électrique est désactivé, et le moteur à combustion interne est relancé au moyen de la machine électrique lorsqu'une demande de charge intervient suite à une action du conducteur du véhicule. Avant de redémarrer le moteur à combustion interne, la position de l'embrayage est vérifiée et le moteur à combustion interne est redémarré une fois que l'embrayage est totalement ouvert. De cette manière, lorsque l'embrayage est actionné, c'est-à-dire, aussitôt que le conducteur a commencé à actionner embrayage, et avant l'ouverture complète de celui-ci, l'onduleur de la machine électrique est activé ou le courant de magnétisation pour le machine est généré.

Ainsi, en appliquant le courant électrique de magnétisation au moment même où une action préalable est détectée, et donc avant qu'un ordre de démarrage effectif n'ait été donné, le procédé selon l'invention, permet de magnétiser le rotor par anticipation. Il en résulte une diminution de l'intervalle de temps s'écoulant entre l'ordre de démarrage et le moment où le moteur thermique démarre effectivement, ceci du fait qu'au moins une partie de la phase de magnétisation du rotor est masquée dans le délai séparant l'action préalable au démarrage et l'envoi de l'ordre de démarrage.

Bien entendu, il se peut que la préparation anticipée du rotor ait été effectuée sans qu'elle soit suivie d'un ordre de démarrage effectif. Dans ce cas, l'invention prévoit que l'application du courant électrique de magnétisation est interrompue si un ordre de démarrage n'est pas déclenché après un délai donné après détection de ladite action préalable. Ce délai peut être par exemple de 3 secondes.

De plus, l'invention propose qu'après une interruption de l'application du courant électrique de magnétisation, une nouvelle tentative de préparation de la machine électrique réversible n'est effectuée qu'après annulation de ladite action préalable. On s'assure ainsi que le procédé conforme à l'invention est bien remis à zéro avant une nouvelle tentative de démarrage.

De manière à éviter toute surchauffe de l'alterno-démarreur, l'invention préconise qu'une nouvelle tentative de préparation de la machine électrique réversible est interdite après un nombre maximal donné de tentatives interrompues. Ce nombre maximal de tentatives peut être pris égal à 5.

Selon un mode particulier de réalisation de l'invention, ladite action préalable est un enfoncement d'une pédale de commande d'entraînement du moteur thermique.

Plus précisément, ladite pédale est une pédale d'embrayage et/ou une pédale d'accélération. Ces actions effectuées sur les pédales d'embrayage ou d'accélération constituent des conditions dites préalables à un redémarrage du moteur thermique par le système « Stop and Go ». Le choix particulier de ces actions d'enfoncement des pédales d'embrayage ou d'accélération n'est en aucun cas limitatif, l'invention pouvant s'appliquer de la même manière à d'autres actions liées à d'autres conditions préalables.

Dans ce contexte particulier de l'invention, ledit enfoncement est détecté par au moins un capteur d'enfoncement de ladite pédale, la détection d'un premier niveau d'enfoncement déclenchant l'application dudit courant électrique de magnétisation au rotor de la machine électrique réversible, et la détection d'un deuxième niveau d'enfoncement déclenchant ledit ordre de démarrage.

De même, ladite annulation d'action préalable est constituée par un enfoncement nul de ladite pédale. En d'autres termes, le conducteur doit relâcher complètement la pédale concernée pour autoriser une nouvelle phase de préparation.

Deux formes pratiques de réalisation peuvent être envisagées.

Selon une première forme de réalisation, lesdits premier et deuxième niveaux d'enfoncement sont détectés par deux capteurs binaires successifs.

Selon une deuxième forme de réalisation, lesdits premier et deuxième niveaux d'enfoncement sont détectés par un capteur continu.

Cette deuxième forme de réalisation présente l'avantage que ledit capteur continu est également apte à fournir une vitesse d'enfoncement.

On peut alors prendre en compte ce paramètre de vitesse pour affiner la détermination du premier niveau d'enfoncement, et décider par exemple que, selon l'invention, la valeur du premier niveau d'enfoncement augmente quand la vitesse d'enfoncement diminue jusqu'à une valeur minimum donnée.

Il est aussi possible de prévoir, conformément à l'invention, que, pour des vitesses d'enfoncement inférieures à ladite valeur minimum, aucun courant électrique de magnétisation n'est appliqué au rotor de la machine électrique réversible.

La description qui va suivre en regard des dessins annexés, donnés à titre d'exemples non limitatifs, fera bien comprendre en quoi consiste l'invention et comment elle peut être réalisée.

### Brève description des figures

La figure 1 est un schéma d'un système de démarrage/arrêt automatique d'un moteur thermique d'un véhicule.
La figure 2 est un chronogramme illustrant un exemple de magnétisation du rotor de l'alterno-démarreur montré à la figure 1.

### Description détaillée de modes de réalisation préférentiels de l'invention

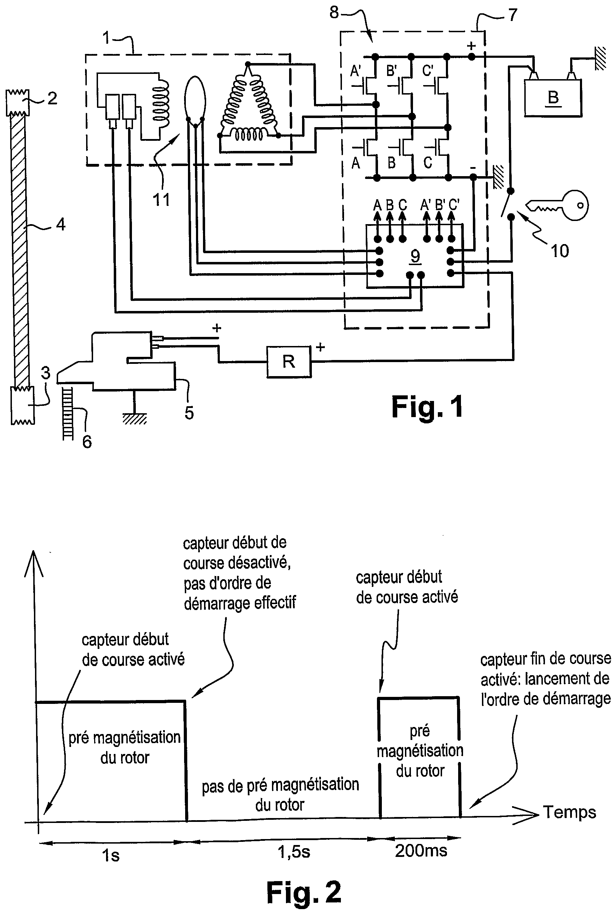

Sur la figure 1 est représenté un système de démarrage/arrêt automatique d'un moteur thermique d'un véhicule, notamment le système « Stop and Go » mentionné plus haut. Dans la suite de la description, il sera fait référence à un véhicule équipé d'une machine électrique réversible, telle qu'un alterno-démarreur, commandée selon les modalités du système « Stop and Go ». Bien entendu, toute autre machine électrique, réversible ou non, pourrait être utilisée dans le contexte de l'invention.

Le système de la figure 1 comprend :
- un alterno-démarreur séparé 1 comportant un arbre se terminant par une poulie 2 qui est reliée à une poulie 3 du vilebrequin du moteur thermique par l'intermédiaire d'une courroie 4. Cet alterno-démarreur est monté à la place que prend habituellement l'alternateur.
- optionnellement, un démarreur 5 classique additionnel dont le pignon est apte à engrener la denture d'une couronne 6 pour entraîner l'arbre du moteur thermique.
- une électronique 7 de pilotage.

L'électronique 7 de pilotage comprend :
- un pont 8 de transistors qui constitue un convertisseur de puissance réversible et qui assure le pilotage en mode démarreur et le redressement synchrone en mode alternateur.
- un module 9 de contrôle qui commande les différents transistors du convertisseur 8 et gère notamment les différentes fonctions suivantes :
   - puissance en modes démarreur et alternateur
   - régulation en mode alternateur
   - transition du mode démarreur au mode alternateur
   - stratégie de fonctionnement

Le module 9 de contrôle est à cet effet alimenté par la tension de la batterie, référencée par B, à laquelle il est relié par l'intermédiaire d'un interrupteur 10 de contact du véhicule.

Il reçoit en entrée des informations lui permettant de déterminer la position angulaire du rotor de l'alterno-démarreur 1, par exemple des informations fournies par des capteurs 11, tels que des capteurs à effet Hall.

En sortie, il alimente l'inducteur de l'alterno-démarreur 1, ainsi que le démarreur 5 et génère les tensions injectées sur les grilles (A, B, C ; A', B', C') des transistors du pont 8.

Par ailleurs, le module 9 de contrôle reçoit des informations provenant de capteurs de mesure et de détection répartis dans le véhicule, comme des capteurs de détection de la position de différents organes, tels que pédale d'embrayage, pédale d'accélération, etc, ces informations constituant notamment des conditions préalables à l'envoi d'un ordre de démarrage.

Dans un système de démarrage/arrêt automatique, tel que le système « Stop and Go », un ordre de démarrage du moteur thermique du véhicule peut être donné à la suite d'une action préalable, par exemple en enfonçant la pédale d'embrayage ou la pédale d'accélération.

Afin d'obtenir un démarrage effectif du moteur le plus rapide possible après détection d'une action préalable, l'invention propose de magnétiser le rotor de l'alterno-démarreur par une application précoce d'un courant électrique dès que ladite action préalable est détectée, c'est-à-dire par anticipation, sans attendre l'envoi de l'ordre de démarrage.

Ce procédé de préparation du rotor peut être mise en oeuvre par :
- au moins deux capteurs tout ou rien, à savoir, un capteur de début de course de la pédale (qui est par exemple à 0 si la pédale est relâchée, et à 1 si elle est enfoncée de plus de 10%) et un capteur de fin de course (qui est par exemple à 0 si la pédale est enfoncée de moins de 90 % et à 1 si elle est enfoncée de plus de 90%),
- ou un capteur continu sur la pédale qui fournit une valeur continue entre 0 si la pédale est relâchée et 100% si la pédale est complètement enfoncée.

Dans le cas de deux capteurs tout ou rien, le capteur de début de course détecte un premier niveau d'enfoncement de la pédale (plus de 10% par exemple), et le capteur de fin de course détecte un deuxième niveau d'enfoncement (plus de 90% par exemple).

La magnétisation du rotor est lancée si le capteur de début de course est activé tandis que l'ordre de démarrage effectif n'est envoyé que si le capteur fin de course est activé à son tour.

Dans tous les cas, l'application interrompt la magnétisation du rotor en coupant le courant électrique de magnétisation si un ordre de démarrage effectif n'est pas émis après un délai donné, de 3 secondes par exemple. Une nouvelle magnétisation n'est possible que lorsque le conducteur a annulé l'action préalable, c'est-à-dire ici en relâchant la pédale.

On autorise un maximum de cinq tentatives de magnétisation interrompues, non suivies d'un ordre de démarrage effectif, ceci afin d'éviter les risques de surchauffe de l'alterno-démarreur.

Le chronogramme de la figure 2 donne un exemple de magnétisation du rotor avec deux capteurs tout ou rien.

Sur ce chronogramme, on voit qu'une première magnétisation a été interrompue du fait que la pédale a été relâchée avant d'avoir atteint le deuxième niveau d'enfoncement. La deuxième magnétisation a été suivie d'un démarrage effectif du moteur, le capteur de fin de course ayant été activé.

Dans le cas d'un capteur continu, deux paramètres peuvent être pris en compte : d'une part, le niveau d'enfoncement de la pédale, et, d'autre part, la vitesse d'enfoncement, c'est-à-dire la vitesse à laquelle le conducteur enfonce la pédale. Cette vitesse peut être évaluée directement à partir d'un pourcentage d'enfoncement par unité de temps.

Si le conducteur enfonce la pédale de plus de 1% en moins d'1 milliseconde, l'application considère que la vitesse d'enfoncement est très rapide, et que le conducteur va très probablement démarrer. L'application commence alors à magnétiser le rotor quand un pourcentage d'enfoncement de 30% est atteint, l'ordre effectif de démarrage étant lancé à 90% d'enfoncement.

Si le conducteur enfonce la pédale de 1% en un temps compris entre 1 et 3 millisecondes, l'application considère que la vitesse d'enfoncement est rapide, et que le conducteur va probablement démarrer. L'application commence alors à magnétiser le rotor quand un pourcentage d'enfoncement de 60% est atteint, l'ordre effectif de démarrage étant toujours lancé à 90% d'enfoncement.

Il est bien entendu possible d'imaginer un pourcentage d'enfoncement pour lancer la magnétisation du rotor qui augmente, proportionnellement par exemple, quand la vitesse d'enfoncement diminue.

En deçà d'une certaine vitesse d'enfoncement de la pédale (moins de 1% en 1 ms par exemple), l'application considère que conducteur ne souhaite pas démarrer, et le rotor n'est pas magnétisé. L'ordre de démarrage sera néanmoins donné si la pédale est enfoncée de plus de 90%, sans bénéficier toutefois de l'avantage d'une magnétisation anticipée.

Là encore, l'application stoppe la magnétisation du rotor si un ordre de démarrage effectif n'est pas survenu après 3 secondes. Une nouvelle magnétisation n'est possible que lorsque le conducteur a relâché la pédale. Pour éviter les risques de surchauffe, un maximum de 5 magnétisations successives sans ordre de démarrage effectif est autorisé.

## Revendications

1. Procédé de préparation d'une machine électrique réversible (1) à une phase de démarrage d'un moteur thermique d'un véhicule équipé d'un système de démarrage/arrêt automatique, ladite machine électrique réversible comportant un rotor couplé audit moteur thermique, ledit procédé comportant des étapes consistant à détecter une action préalable à un ordre de démarrage du moteur thermique, et à appliquer au rotor de ladite machine un courant électrique de magnétisation dès détection de ladite action préalable, ladite action préalable étant un enfoncement d'une pédale de commande d'entraînement du moteur thermique, **caractérisé en ce que** ledit procédé comporte une étape de :
- détection d'un premier niveau d'enfoncement déclenchant l'application dudit courant électrique de magnétisation au rotor de la machine électrique réversible, et une étape de la détection d'un deuxième niveau d'enfoncement déclenchant ledit ordre de démarrage, et en ce sens que
- ledit premier niveau d'enfoncement est au moins égal à environ 10% de l'enfoncement total et ledit deuxième niveau d'enfoncement est au moins égal à environ 90% de l'enfoncement total.

2. Procédé selon la revendication 1, **caractérisé en ce que** ladite pédale est une pédale d'embrayage et/ou une pédale d'accélérateur.

3. Procédé selon l'une des revendications 1 ou 2, **caractérisé en ce que** lesdits premier et deuxième niveaux d'enfoncement sont détectés par deux capteurs binaires successifs.

4. Procédé selon l'une des revendications 1 à 3, **caractérisé en ce que** lesdits premier et deuxième niveaux d'enfoncement sont détectés par un capteur continu.

5. Procédé selon la revendication 4, **caractérisé en ce que** ledit capteur continu est également apte à fournir une vitesse d'enfoncement.

6. Procédé selon la revendication 5, **caractérisé en ce que** la valeur du premier niveau d'enfoncement augmente quand la vitesse d'enfoncement diminue jusqu'à une valeur minimum donnée.

7. Procédé selon la revendication 6, **caractérisé en ce que**, pour des vitesses d'enfoncement inférieures à ladite valeur minimum, aucun courant électrique de magnétisation n'est appliqué au rotor de la machine électrique réversible.

8. Procédé selon l'une quelconque des revendications 1 à 7, **caractérisé en ce que** l'application du courant électrique de magnétisation est interrompue si un ordre de démarrage n'est pas déclenché après un délai donné après détection de ladite action préalable.

9. Procédé selon la revendication 8, **caractérisé en ce qu'**après une interruption de l'application du courant électrique de magnétisation, une nouvelle tentative de préparation de la machine électrique réversible n'est effectuée qu'après annulation de ladite action préalable.

10. Procédé selon les revendications 1 et 9, **caractérisé en ce que** ladite annulation d'action préalable est constituée par un enfoncement nul de ladite pédale.

11. Procédé selon l'une quelconque des revendications 8 à 10, **caractérisé en ce qu'**une nouvelle tentative de préparation de la machine électrique réversible est interdite après un nombre maximal donné de tentatives interrompues.

## Patentansprüche

1. Verfahren zur Steuerung einer reversiblen elektrischen Maschine (1) in einer Startphase eines Verbrennungsmotors eines Fahrzeugs, das mit einem automatischen Start/Stopp-System ausgestattet ist, wobei die reversible elektrische Maschine einen Rotor umfasst, der an den Verbrennungsmotor gekoppelt ist, wobei das Verfahren die Schritte umfasst, darin bestehend, eine vorherige Aktion vor einem Startbefehl des Verbrennungsmotors zu erfassen und an den Rotor der Maschine einen elektrischen Magnetisierungsstrom bei Erfassen der vorherigen Aktion anzulegen, wobei die vorherige Aktion ein Drücken eines Antriebssteuerungspedals des Verbrennungsmotors ist, **dadurch gekennzeichnet, dass** das Verfahren umfasst:
- einen Schritt der Erfassung eines ersten Niveaus des Drückens, das das Anlegen des elektrischen Magnetisierungsstroms an den Rotor der reversiblen elektrischen Maschine auslöst, und einen Schritt der Erfassung eines zweiten Niveaus des Drückens, das den Startbefehl auslöst, und in diesem Sinne, dass
- das erste Niveau des Drückens mindestens gleich ungefähr 10 % des vollständigen Drückens ist, und das zweite Niveau des Drückens mindestens gleich ungefähr 90 % des vollständigen Drückens ist.

2. Verfahren nach Anspruch 1, **dadurch gekennzeichnet, dass** das Pedal ein Kupplungspedal und/oder ein Gaspedal ist.

3. Verfahren nach einem der Ansprüche 1 oder 2, **dadurch gekennzeichnet, dass** die ersten und zweiten Niveaus des Drückens von zwei aufeinanderfolgenden Binärsensoren erfasst werden.

4. Verfahren nach einem der Ansprüche 1 bis 3, **dadurch gekennzeichnet, dass** die ersten und zweiten Niveaus des Drückens von einem kontinuierlichen Sensor erfasst werden.

5. Verfahren nach Anspruch 4, **dadurch gekennzeichnet, dass** der kontinuierliche Sensor auch geeignet ist, eine Drückgeschwindigkeit zu liefern.

6. Verfahren nach Anspruch 5, **dadurch gekennzeichnet, dass** der Wert des ersten Niveaus des Drückens größer wird, wenn die Drückgeschwindigkeit bis zu einem gegebenen Mindestwert kleiner wird.

7. Verfahren nach Anspruch 6, **dadurch gekennzeichnet, dass** bei Drückgeschwindigkeiten unter dem Mindestwert kein elektrischer Magnetisierungsstrom an den Rotor der reversiblen elektrischen Maschine angelegt wird.

8. Verfahren nach einem der Ansprüche 1 bis 7, **dadurch gekennzeichnet, dass** das Anlegen des elektrischen Magnetisierungsstroms unterbrochen wird, wenn ein Startbefehl nach einer gegebenen Frist nach Erfassung der vorherigen Aktion nicht ausgelöst wird.

9. Verfahren nach Anspruch 8, **dadurch gekennzeichnet, dass** nach einer Unterbrechung des Anlegens des elektrischen Magnetisierungsstroms ein neuer Versuch der Steuerung der reversiblen elektrischen Maschine erst nach Annullierung der vorherigen Aktion erfolgt.

10. Verfahren nach den Ansprüchen 1 und 9, **dadurch gekennzeichnet, dass** die Annullierung der vorherigen Aktion von einem Drücken gleich Null des Pedals gebildet ist.

11. Verfahren nach einem der Ansprüche 8 bis 10, **dadurch gekennzeichnet, dass** ein neuer Versuch der Steuerung der reversiblen elektrischen Maschine nach einer gegebenen maximalen Anzahl von unterbrochenen Versuchen untersagt wird.

## Claims

1. Method for preparing a single-phase reversible electric machine (1) for starting a combustion engine of a vehicle fitted with an automatic stop-start system, said reversible electric machine including a rotor that is coupled to said combustion engine, said method including steps consisting in detecting an action prior to a command to start the combustion engine, and in applying, to the rotor of said machine, a magnetizing electric current on detection of said prior action, said prior action being a depression of a drive control pedal for the combustion engine, **characterized in that** said method includes a step of:
- detecting a first level of depression triggering the application of said magnetizing electric current to the rotor of the reversible electric machine, and a step of detecting a second level of depression triggering said start command; and **in that**
- said first level of depression is at least equal to around 10% total depression and said second level of depression is at least equal to around 90% total depression.

2. Method according to Claim 1, **characterized in that** said pedal is a clutch pedal and/or an accelerator pedal.

3. Method according to either of Claims 1 and 2, **characterized in that** said first and second levels of depression are detected by two successive binary sensors.

4. Method according to one of Claims 1 to 3, **characterized in that** said first and second levels of depression are detected by a continuous sensor.

5. Method according to Claim 4, **characterized in that** said continuous sensor is also capable of supplying a speed of depression.

6. Method according to Claim 5, **characterized in that** the value of the first level of depression increases as the speed of depression decreases down to a given minimum value.

7. Method according to Claim 6, **characterized in that**, at speeds of depression that are lower than said minimum value, no magnetizing electric current is applied to the rotor of the reversible electric machine.

8. Method according to any one of Claims 1 to 7, **characterized in that** the application of the magnetizing electric current is interrupted unless a start command is triggered within a given period after detection of said prior action.

9. Method according to Claim 8, **characterized in that**, after the application of the magnetizing electric current has been interrupted, a new attempt to prepare the reversible electric machine is made only once said prior action has been cancelled.

10. Method according to Claims 1 and 9, **characterized in that** said cancellation of a prior action consists of zero depression of said pedal.

11. Method according to any one of Claims 8 to 10, **characterized in that** any new attempt to prepare the reversible electric machine is prevented after a given maximum number of interrupted attempts.
